# EUROPÄISCHE PATENTSCHRIFT

(11) **EP 0 625 406 B1**
(45) Veröffentlichungstag und Bekanntmachung des Hinweises auf die Patenterteilung: **19.11.1997**
(21) Anmeldenummer: 94102604.9
(22) Anmeldetag: 22.02.1994
(51) Int. Cl.: B24B 5/36

(54) **Verfahren zur schneidenden Oberflächenbearbeitung von Elastomeren**
Method for working the surface of elastomeres
Procédé de coupe de surfaces d'élastomères

(30) Priorität: 25.02.1993 DE 4305716
(43) Veröffentlichungstag der Anmeldung: 23.11.1994
(73) Patentinhaber: FELIX BÖTTCHER GmbH & Co., D-50933 Köln (DE)
(72) Erfinder: Scholz, Günter, D-51429 Bergisch-Gladbach (DE); Stammel, Willi, D-50171 Kerpen (DE)
(74) Vertreter: Werner, Hans-Karsten, Dr.Dipl.-Chem.

(56) Entgegenhaltungen:
- EP-A- 0 050 173
- AU-B- 484 112
- DE-A- 2 504 012
- GB-A- 703 849
- PATENT ABSTRACTS OF JAPAN vol. 1, no. 115 (M-39) 30. September 1977 & JP-A-52 051 191 (SHINKO ELECTRIC) 23. April 1977

## Beschreibung

Gegenstand der Erfindung ist ein Verfahren zur schneidenden Oberflächenbearbeitung von Elastomeren ("ELASTO-CUT"), insbesondere zur Oberflächenbearbeitung eines rotationssymmetrischen Körpers, dessen äußere Schicht aus Elastomeren mit einer Shore Härte von 10 Shore A bis 100 Shore D besteht.

Nach dem Stand der Technik werden bisher bei der Metall- und Kunststoffbearbeitung konventionelle Fertigungstechniken und Oberflächenbehandlungstechniken wie Schleifen, Drehen, Bandschleifen und Fräsen angewendet. In der Elastomerbearbeitung kennt man neben den oben aufgeführten Fertigungstechniken noch Rubber-Hog und Schälen.

Um gerippte Treibriemen herzustellen beschreibt die EP-A-0 050 173 ein Verfahren, bei dem mehrere V-förmige Messer relativ schnell Kerben in das Material einschneiden, und zwar quer zur Bewegungsrichtung des Materials.

Neben den bekannten Bearbeitungstechniken hat sich in der Metall- und Kunststoffbearbeitung auch der Einsatz von sogenannten Schnellfrequenz-Motorspindeln durchgesetzt. Derartige Schnellfrequenz-Motorspindeln sind so gebaut, daß Drehzahlen bis zu 120.000 U/min erreicht werden können. Für diese Schnellfrequenz-Motorspindeln werden bekannte Hochgeschwindigkeits-Messerköpfe verwendet.

Ein Fräskopf für Holz- und Kunststoffbearbeitung ist beispielsweise beschrieben in der DE-AS-1 190 633. Ein Fräser mit Wendelschneidmesser ist beschrieben in der DE-OS-25 04 012. Weitere spezielle Vorrichtungen im Hobeln und Zerkleinern von Holz und Kunststoffen sind beschrieben in der DE-OS-27 09 360 und der DE-OS-27 36 612.

Bisher wurden derartige Schnellfrequenz-Motorspindeln mit den Hochgeschwindigkeits-Messerköpfen nur bei sehr harten Werkstoffen in der Metall- und Kunststoffbearbeitung eingesetzt. Für weichere Materialien wurden Schnellfrequenz-Motorspindeln mit Hochgeschwindigkeits-Messerköpfen bisher nicht eingesetzt, da bei weicheren Materialien davon ausgegangen wurde, daß die Anforderungen an die Oberflächenbeschaffenheit bei dieser Art der Bearbeitung nicht erfüllt würden. Dies gilt insbesondere für Beschichtungen rotationssymmetrischer Körper oder Walzen, die vollständig aus Elastomeren bestehen.

Die bisherigen Techniken des Standes der Technik zur Oberflächenbearbeitung haben den Nachteil, daß bei der Materialbearbeitung eine hohe Wärmeentwicklung auftritt. Weiterhin kann der sogenannte Trompeteneffekt auftreten. Darunter versteht man eine Unregelmäßigkeit der Symmetrie des Werkstücks am Ende der zu bearbeitenden Flächen. Weiterhin können Schwingungslinien (sogenannte Rattermarken) auftreten.

Eine kontrollierte Spanabführung ist bei den bisherigen Verfahren nicht möglich, da das abgetragene Material zwischen Schleifscheibe und Werkstück gerät und damit eine Schleifkommabildung auf der zu bearbeitenden Oberfläche auftreten kann.

Das technische Problem der Erfindung ist es daher, ein Verfahren zu entwickeln zur Oberflächenbearbeitung eines rotationssymmetrischen Körpers, dessen äußere Schicht aus Elastomeren mit einer Shore Härte von 10 Shore A bis 100 Shore D besteht, das die vorstehenden Nachteile vermeidet.

Dieses Problem wird dadurch gelöst, daß eine Schnellfrequenz-Motorspindel mit einem Hochgeschwindigkeits-Messerkopf an den Körper angestellt wird und der Körper anschließend durch Schneiden mit den Wendeplatten (Messern) des rotierenden Messerkopfes behandelt wird.

Im allgemeinen kann der Messerkopf mit Geschwindigkeiten von 500 bis 120.000 U/min, vorzugsweise 5.000 bis 120.000 U/min rotieren. Die für die schneidende Oberflächenbearbeitung vorgesehenen Elastomere werden in der Regel direkt auf einen rotationssymmetrischen Körper aus Stahl, Kunststoff oder Verbundmaterialien (GFK, CFK etc.) aufgebracht. Je nach Bedarf können jedoch zwischen den zu bearbeitenden Elastomeren und dem rotationssymmetrischen Körper auch noch verschiedene Zwischenschichten aus anderen Materialien vorhanden sein.

Die Bearbeitung der rotationssymmetrischen Körper erfolgt mit axial oder radial montierter Schnellfrequenz-Motorspindel mit einem Hochgeschwindigkeits-Messerkopf auf dem Support von Werkzeugmaschinen. Die Antriebe des Werkstücks und des Supports (Rotation, Vorschub und Anstellung) erfolgen über die Werkzeugmaschine. Lediglich der Antrieb für die schneidende Zerspanung der Elastomere erfolgt über die Schnellfrequenz-Motorspindel mit dem schnell rotierenden Hochgeschwindigkeits-Messerkopf.

Bei dem Verfahren kommt es weder zu einem Verdrücken noch zu einem Nachgeben des relativ weichen Elastomers. Mit Hilfe des erfindungsgemäßen Verfahrens ist es möglich, eine genau definierbare und reproduzierbare Geometrie und Oberflächenrauhigkeit zu erhalten.

Ein weiterer Vorteil liegt in der Entstehung von sehr geringen Spangrößen, die bei herkömmlichen Verfahren zur Schleifkommabildung durch Einziehen des abgetragenen Materials zwischen Schleifscheiben und Werkstücke führen können.

Bei dem erfindungsgemäßen Verfahren sind die bei der Bearbeitung entstehenden Späne pulverförmig. Es treten daher auch kaum Zerspanungskräfte auf. Hierdurch ist auch die Wärmeentwicklung sehr gering und eine thermische Ausdehnung ist gegenüber den bekannten Zerspanungstechniken nicht feststellbar.

Ein weiterer Vorteil des erfindungsgemäßen Verfahrens liegt in der zentralen Spanabsaugung. Bei herkömmlichen Oberflächenbearbeitungsverfahren bildet sich abgetragenes Material, das zwischen Schleifscheibe und Werkstoff bzw. Werkstück zu Komplikationen, wie Schleifkommabildung an der zu bearbeitenden Oberfläche führt. Beim erfindungsgemäßen Verfahren wird durch die hohe Drehzahl des Hochgeschwindigkeits-Messerkopfes ein großer Luftvolumenstrom erzeugt, der die Späne über den Messerkopf hinweg ansaugt und zentral an eine Spanabsaugungsvorrichtung abführt. Diese besteht aus dem Spiralgehäuse und dem Laufrad, die an dem Werkzeug auf der Schnellfrequenz-Motorspindel montiert sind. Somit wird eine Behinderung der Bearbeitung durch entstehende Späne durch eine kontrollierte Spanabführung verhindert.

Die Qualität der so produzierten Oberfläche ist erheblich besser als bei den bisherigen Techniken der Oberflächenbearbeitung von Elastomeren mit einer Shore Härte von 10 Shore A bis 100 Shore D. Die geforderte Oberflächenstruktur kann über die Parameterform des Schneidwerkzeuges (Freiwinkel, Keilwinkel, Spanwinkel), Drehzahl der Spindel für das Werkzeug, Drehzahl der Spindel für das Werkstück, Geschwindigkeit des Vorschubs und die Anzahl der Wendeplatten (Messer) am Messerkopf gesteuert werden.

Bei den so hergestellten Oberflächen treten die Nachteile des Standes der Technik nicht auf. Die Wärmeentwicklung bei der erfindungsgemäßen Oberflächenbearbeitung ist sehr gering. Man erhält eine bessere Geometrie und eine bessere Maßeinhaltung der Oberfläche. Der Trompeteneffekt wird vermieden. Vorschubmarkierungen in radialer Richtung (Druckrichtung) treten ebensowenig auf wie Schwingungslinien (Rattermarken). Es kommt auch nicht zu Rißbildungen beim Bearbeiten. Mit dem Verfahren lassen sich auch alle gängigen Oberflächenbearbeitungen wie Nuten, Bohren, Profilierungen jeder Art, Stirn- und Mantelflächenbearbeitungen ausführen.

Weiterhin hat das Verfahren den Vorteil, daß Bearbeitungs- und Umrüstzeiten erheblich reduziert werden können. So können Arbeitsschritte, die nach heutigem Stand der Technik verfahrensbedingt auf verschiedenen Anlagen und Maschinen erfolgen müssen, auf einer Maschine zusammengefaßt werden.

Durch die zentrale kontrollierte Spanabführung ist keine Oberflächenreinigung nach dem Arbeitsschritt Oberflächenbearbeitung notwendig. Arbeitsschritte wie Längenschneiden, Planschneiden, Vorschruppen, Vorschleifen, Fertigschleifen, Polieren und Maschinenwechsel bei Längenbearbeitung, Vor- und Endbearbeitung können daher zu Arbeitsschritten auf einer Maschine zusammengefaßt werden. Dadurch und durch die höhere Schneidleistung der Hochfrequenz-Messerköpfe werden die Bearbeitungszeiten von Oberflächen erheblich reduziert.

Das erfindungsgemäße Verfahren kann durch einfaches Umrüsten aller Werkzeugmaschinen auf bereits vorhandenen Anlagen erfolgen. Auch eine etwaige vorhandene Absauganlage kann weiterhin genutzt werden, da die zentrale Staubabsaugung hieran angeschlossen werden kann.

Bei dem Verfahren fallen wiederaufarbeitbare Abfallstoffe mit annähernd gleicher Partikelgröße in Pulverform an, die während der schneidenden Zerspanung nicht mit flüssigen Medien gekühlt werden müssen und sich wegen der geringen Wärmeentwicklung nicht entzünden können. Diese werden über die oben beschriebene Absaugvorrichtung vom Werkstück weggeführt. Damit wird auf einfache Weise eine Rauch- und Staubentwicklung vermieden ohne weitere aufwendige Zündschutzmaßnahmen.

Hieraus ergeben sich wesentliche Vorteile bei der Wiederverwertbarkeit des Abfalls, da keine Veränderung des Materials durch Wärmeentwicklung oder durch Kühlmittel eintritt.

Mit dem erfindungsgemäßen Verfahren oberflächenbehandelte Walzen verfügen im wesentlichen aufgrund der verbesserten Geometrie und Oberflächenstruktur über eine gleichbleibende, dosierte Medienabgabe. Diese vorteilhaften Eigenschaften kommen bei der Anwendung z.B. bei Druckwalzen zum Tragen.

Insbesondere, wenn so gearbeitet wird, daß sich die Schnittlinien kreuzen, entstehen annähernd rautenförmige Muster. Bei Verwendung von Schneidwerkzeugen mit ausgeprägten Hohlschliff entstehen dadurch annähernd rautenförmige Näpfchen, die nicht nur eine gleichmäßige Rauhigkeit, sondern auch Aufnahmefähigkeit für Druckfarben aufweisen, was wiederum bei Druckwalzen erwünscht ist. Die Form und Tiefe der Näpfchen läßt sich steuern über die Parameter Vorschub, Anstellung, die zwei Rotationsgeschwindigkeiten und die Geometrie der Schneidwerkzeuge. Optimale Ergebnisse werden immer dann erreicht, wenn so gearbeitet wird, daß das Material geschnitten und nicht gerupft wird. Dies wird vor allem erreicht mit Messern, die zwei gleichzeitig arbeitende Flanken aufweisen und an beiden Flanken einen Hohlschliff aufweisen.

Eine typische Vorrichtung zur Durchführung des Verfahrens besteht aus
1) einer Werkzeugmaschine mit Antrieb und Support,
2) einer Schnellfrequenz-Motorspindel mit schnell rotierendem Hochgeschwindigkeitsmesserkopf.

Vorzugsweise weist die Vorrichtung eine zentrale Staubabsaugung auf.

Schließlich weist die Vorrichtung vorzugsweise Messer auf mit zwei gleichzeitig arbeitende Flanken, wobei diese beide einen Hohlschliff aufweisen.

Das erfindungsgemäße Verfahren kann weiterhin integrativer Bestandteil eines Bearbeitungszentrums sein mit den weiteren Funktionen automatischer Werkzeugwechsel, automatischer Werkstückwechsel, CNC-Steuerung, Schnittstelle für Betriebsdatenerfassung.

## Patentansprüche

1. Verfahren zur schneidenden Oberflächenbearbeitung eines rotationssymmetrischen Körpers, dessen äußere Schicht aus Elastomeren mit einer Shore Härte von 10 Shore A bis 100 Shore D besteht, wobei der rotationssymmetrische Körper in eine Werkzeugmaschine eingespannt ist und eine Schnellfrequenz-Motorspindel mit einem Hochgeschwindigkeits-Messerkopf an den Körper angestellt wird, und der Körper anschließend durch Schneiden mit den Wendeplatten des rotierenden Messerkopfes behandelt wird.

2. Verfahren nach Anspruch 1, dadurch gekennzeichnet, daß der Messerkopf mit 500 bis 120.000 U/min um seine Längsachse rotiert.

3. Verfahren nach Anspruch 1 oder 2, dadurch gekennzeichnet, daß das Elastomer mit einer Shore Härte gemäß Anspruch 1 die äußere Schicht eines beschichteten rotationssymmetrischen Körpers ist.

4. Verfahren gemäß einem der Ansprüche 1 bis 3, dadurch gekennzeichnet, daß die Drehzahl des Körpers in der Werkzeugmaschine, der Vorschub, die Anstellung und die Drehzahl des Messerkopfs unabhängig voneinander eingestellt werden.

5. Verfahren gemäß Anspruch 4, dadurch gekennzeichnet, daß eine definierte und reproduzierbare Geometrie und Oberflächenrauhigkeit eingestellt wird.

6. Verfahren gemäß Anspruch 4 oder 5, dadurch gekennzeichnet, daß die Oberfläche annähernd rautenförmige Näpfchen aufweist. 7. Verfahren gemäß einem der Ansprüche 1 bis 6, dadurch gekennzeichnet, daß die Späne zentral abgesaugt werden.

## Claims

1. A method for the cutting surface working of a rotationally symmetrical body the outer layer of which consists of elastomers having a Shore hardness of 10 Shore A to 100 Shore D wherein said rotationally symmetrical body is clamped in a machine tool and a high cycle motor spindle with a high speed cutter head is adjusted to the body, followed by treating the body by cutting with the indexable inserts of the rotating cutter head.

2. The method according to claim 1, characterized in that said cutter head rotates at from 500 to 120,000 rpm around its longitudinal axis.

3. The method according to claim 1 or 2, characterized in that said elastomer having a Shore hardness according to claim 1 is the outer layer of a coated rotationally symmetrical body.

4. The method according to any of claims 1 to 3, characterized in that the revolutions per minute of the body in the machine tool, the advance, the adjustment and the revolutions per minute of the cutter head are set independently of one another.

5. The method according to claim 4, characterized in that a defined and reproducible geometry and surface roughness is adjusted.

6. The method according to claim 4 or 5, characterized in that the surface has approximately rhombic cups.

7. The method according to any of claims 1 to 6, characterized in that the chips are sucked off centrally.

## Revendications

1. Procédé pour le traitement coupant des surfaces d'un corps à symétrie de révolution, dont la couche extérieure est en élastomère ayant une dureté Shore de 10 Shore A à 100 Shore D, où le corps à symétrie de révolution est bloqué dans une machine-outil, et un arbre de moteur à fréquence rapide avec une tête porte-lames à grande vitesse est mis en contact avec le corps, et le corps ensuite soumis au traitement de découpage par les lames-plaquettes réversibles de la tête porte-lames en rotation.

2. Procédé suivant la revendication 1, caractérisé en ce que la tête porte-lames est en rotation autour de son axe longitudinal à une vitesse de 500 à 120 000 tours/mn.

3. Procédé suivant la revendication 1 ou 2, caractérisé en ce que l'élastomère ayant une dureté Shore suivant la revendication 1 représente la couche externe de revêtement d'un corps à symétrie de révolution.

4. Procédé suivant l'une des revendications 1 à 3, caractérisé en ce que la vitesse du corps dans la machine-outil, l'avancement, l'incidence et la vitesse de la tête porte-lames sont réglés indépendamment les uns des autres.

5. Procédé suivant la revendication 4, caractérisé en ce qu'une géométrie et une rugosité de surface sont réglées de manière définie et reproductible.

6. Procédé suivant la revendication 4 ou 5, caractérisé en ce que la surface présente des petits godets approximativement en forme de losanges.

7. Procédé suivant l'une des revendications 1 à 6, caractérisé en ce que les copeaux sont aspirés par le centre.
